# EUROPEAN PATENT APPLICATION

(11) **EP 2 985 850 A1**
(43) Date of publication of application: **17.02.2016**
(21) Application number: 13877932.7
(22) Date of filing: 25.12.2013
(51) Int. Cl.: H02J 7/00, B60L 11/18, B60M 7/00, H01M 10/44, H01M 10/46, H02J 50/00, H04B 5/02

(54) **NON-CONTACT CHARGING SYSTEM**

(30) Priority: 11.03.2013 JP 2013048174
(71) Applicant: Kabushiki Kaisha Toyota Jidoshokki, Kariya-shi, Aichi 448-8671 (JP)
(72) Inventor: HIKA, Koji, Kariya-shi Aichi 448-8671 (JP); HIRAYAMA, Yuichi, Kariya-shi Aichi 448-8671 (JP); KATO, Isami, Kariya-shi Aichi 448-8671 (JP); TSUNEKAWA, Yuki, Kariya-shi Aichi 448-8671 (JP); SUZUKI, Yasuhiro, Kariya-shi Aichi 448-8671 (JP)
(74) Representative: TBK
(86) International application number: PCT/JP2013/084737
(87) International publication number: WO 2014/141565

(57) **Abstract**

By comparing a vehicle ID transmitted between an excitation coil 24 and a magnetic sensor 15a with a vehicle ID transmitted between a power feeding apparatus wireless communication unit 12a and a charging apparatus wireless communication unit 21, a charging station 2a with which a vehicle 3 should establish a wireless communication connection can be easily and reliably specified from a plurality of charging stations 2a, 2b, 2c.

## Description

### TECHNICAL FIELD

The present invention relates to a noncontact charging system, and more particularly to a noncontact charging system using an excitation coil and a magnetic sensor.

### BACKGROUND ART

Electric vehicles (EVs) that travel using an electric motor and plug-in hybrid vehicles (PHVs) that travel using both an electric motor and a gasoline engine are increasing in popularity. A battery is installed in an EV and a PHV, and the vehicle is caused to travel by driving the motor using electric energy stored in the battery.

At present, a charging system for an EV or a PHV is typically realized by disposing charging stations in each of a plurality of parking spaces provided in a parking area so that the vehicle can be charged while parked in the parking space. Further, power may be supplied to the vehicle from the charging station using either a contact charging system in which the charging station is connected to the vehicle by a dedicated charging cable, or a noncontact charging system in which power is supplied using the principle of electromagnetic induction or the like while a state of noncontact is maintained between the charging station and the vehicle.

Furthermore, when a vehicle is charged from a charging station, various control commands have to be exchanged between the charging station and the vehicle. In the contact charging system in which the charging station is connected to the vehicle by a charging cable, the various control commands can be exchanged by wired communication using a communication line in the charging cable, but in the case of a noncontact charging system in which a charging cable is not used, the various control commands have to be exchanged between the charging station and the vehicle by noncontact communication such as wireless communication. At this time, when there are a plurality of charging stations are disposed in the parking area, there is a need for the vehicle to specify which charging station it should establish wireless communication connection with some means.

Patent Document 1 describes an apparatus performing noncontact communication between a vehicle and a charging station. In this noncontact communication apparatus, a radio transmission coil is provided in the vicinity of a power reception coil of a noncontact charging apparatus provided in a vehicle, and a radio reception coil is provided in the vicinity of a power feeding coil of a noncontact charging apparatus provided in the charging station. Then, the noncontact communication apparatus realizes the noncontact communication by emitting an electromagnetic wave carrying a modulation signal from the radio transmission coil and entering the electromagnetic wave into the radio reception coil to induce a modulation signal based on electromagnetic induction interaction.

Patent Document 1: Japanese Patent Application Laid Open No. 2011-3947

### SUMMARY OF THE INVENTION

### PROBLEMS TO BE SOLVED BY THE INVENTION

With the noncontact communication method described in Patent Document 1, however, the radio transmission coil and the radio reception coil have complicated configurations in order to avoid a reduction in communication sensitivity and reduce an effect from a power supply magnetic field.

The present invention has been designed in order to solve such a problem, and an object thereof is to provide a noncontact charging system that enables a vehicle to specify a charging station with which it should easily and reliably establish a wireless communication connection from one or a plurality of charging stations.

### MEANS FOR SOVLING THE PROBLEMS

A noncontact charging system according to the present invention comprises a charging apparatus installed in a vehicle and one or more charging stations, each of the charging stations including: a power feeding apparatus that supplies power to the charging apparatus; a power feeding apparatus wireless communication unit provided in the power feeding apparatus in order to perform wireless communication; and a power feeding apparatus noncontact communication unit provided in the power feeding apparatus in order to perform noncontact communication, the charging apparatus including: a charging apparatus wireless communication unit in order to perform the wireless communication; and a charging apparatus noncontact communication unit in order to perform the noncontact communication, wherein the wireless communication can be performed between the charging apparatus and the one or more power feeding apparatuses, and the noncontact communication can be performed between the charging apparatus and only one of the one or more power feeding apparatuses, and wherein an ID determined individually for each vehicle or each charging station is transmitted and received by the wireless communication, and the ID is transmitted and received by the noncontact communication, and the noncontact charging system compares the ID which is transmitted and received by the wireless communication with the ID which is transmitted and received by the noncontact communication, whereby, the noncontact charging system specifies a power feeding apparatus which should perform the wireless communication to the charging apparatus, from the one or more power feeding apparatuses and establish a wireless communication between the power feeding apparatus and the charging apparatus.

### EFFECTS OF THE INVENTION

According to the present invention, the noncontact charging system compares the ID determined individually for each vehicle or each charging station which is transmitted and received between the power feeding apparatus noncontact communication unit and the charging apparatus noncontact communication unit by the noncontact communication with the ID which is transmitted and received between the power feeding apparatus wireless communication unit and the charging apparatus wireless communication unit, whereby the noncontact charging system can specify a charging station which should easily and reliably establish a wireless communication from the one or more charging stations.

### BRIEF DESCRIPTION OF THE DRAWINGS

Fig. 1 is a schematic view showing a noncontact charging system according to a first embodiment of the present invention;
Fig. 2 is a schematic view showing a power feeding apparatus and a charging apparatus provided in the noncontact charging system according to the first embodiment of the present invention;
Fig. 3 is a schematic view showing a sensor detection unit provided in the noncontact charging system according to the first embodiment of the present invention;
Fig. 4 is a schematic view showing an excitation control unit provided in the noncontact charging system according to the first embodiment of the present invention;
Fig. 5 is a sequence diagram of the noncontact charging system according to the first embodiment of the present invention;
Fig. 6 is a view showing a configuration of a vehicle ID used in the noncontact charging system according to the first embodiment of the present invention;
Fig. 7 is a sequence diagram of a modified example of the noncontact charging system according to the first embodiment of the present invention;
Fig. 8 is a schematic view showing a power feeding apparatus and a charging apparatus provided in a noncontact charging system according to a second embodiment of the present invention;
Fig. 9 is a sequence diagram of the noncontact charging system according to the second embodiment of the present invention;
Fig. 10 is a schematic view showing a power feeding apparatus and a charging apparatus provided in a noncontact charging system according to a third embodiment of the present invention;
Fig. 11 is a sequence diagram of the noncontact charging system according to the third embodiment of the present invention;
Fig. 12 is a sequence diagram of a modified example of the noncontact charging system according to the third embodiment of the present invention;
Fig. 13 is a view showing a responsive charging station list used in the noncontact charging system according to the third embodiment of the present invention;
Fig. 14 is a schematic view showing a power feeding apparatus and a charging apparatus provided in a noncontact charging system according to a fourth embodiment of the present invention;
Fig. 15 is a sequence diagram of the noncontact charging system according to the fourth embodiment of the present invention;
Fig. 16 is a schematic view showing a noncontact charging system according to a fifth embodiment of the present invention;
Fig. 17 is a schematic view showing a power feeding apparatus and a charging apparatus provided in the noncontact charging system according to the fifth embodiment of the present invention;
Fig. 18 is a schematic view showing a power feeding apparatus entrance detection unit provided in the noncontact charging system according to the fifth embodiment of the present invention; and
Fig. 19 is a sequence diagram of the noncontact charging system according to the fifth embodiment of the present invention.

### EMBODIMENTS FOR CARRYING OUT THE INVENTION

Embodiments of the present invention will be described below on the basis of the attached drawings.

### First Embodiment

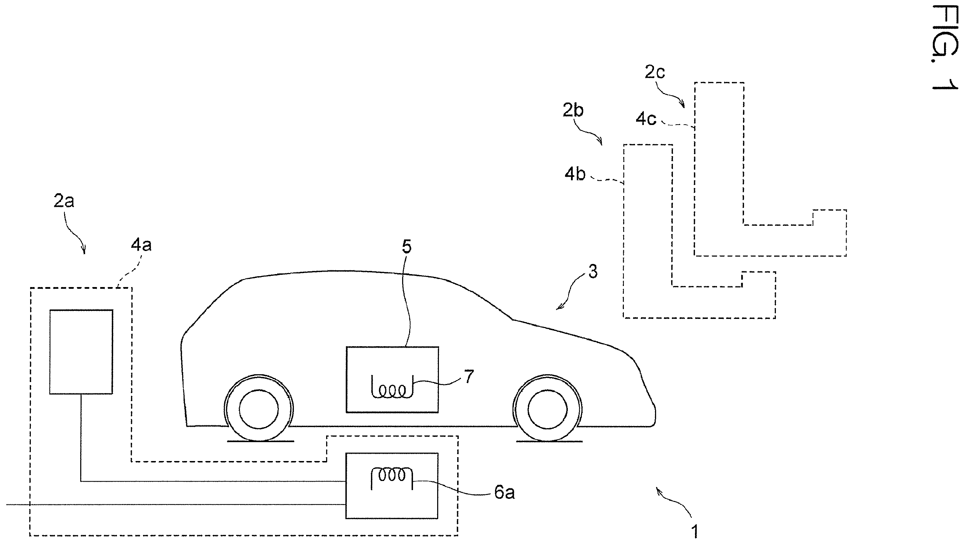

Fig. 1 shows a configuration of a noncontact charging system according to a first embodiment of the present invention.

A noncontact charging system 1 is constituted by a plurality of charging stations and a charging apparatus 5 provided in a vehicle 3. In the first embodiment, three charging stations, namely a charging station 2a and charging stations 2b, 2c configured identically to the charging station 2a, are provided. A power feeding apparatus 4a is provided in the charging station 2a. A power feeding coil 6a is provided in the power feeding apparatus 4a, and a power reception coil 7 is provided in the charging apparatus 5. The power feeding coil 6a and the power reception coil 7 are appropriately disposed on, for example, a floor surface or the like of the charging station 2 and a bottom surface or the like of the vehicle 3, so that when the vehicle 3 is parked in a predetermined parking position of the charging station 2a, the power feeding coil 6a and the power reception coil 7 oppose each other while maintaining a predetermined air gap.

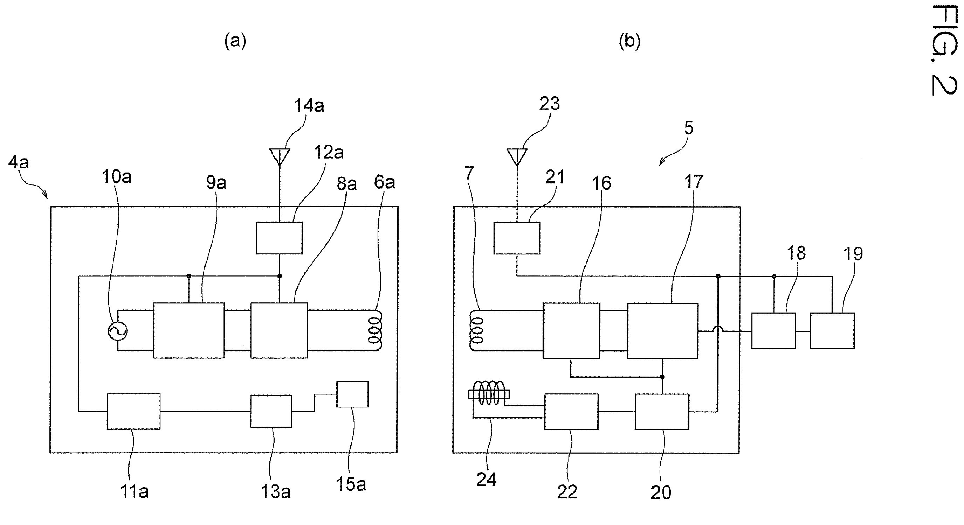

Fig. 2 (a) shows a configuration of the power feeding apparatus 4a. The power feeding coil 6a is electrically connected to a power feeding apparatus matching unit 8a. The power feeding apparatus matching unit 8a is electrically connected to a power supply conversion unit 9a. The power supply conversion unit 9a is electrically connected to an alternating current power supply 10a. The alternating current power supply 10a is an alternating current 200 V power supply, for example. A power feeding apparatus control apparatus 11a is electrically connected to the power feeding apparatus matching unit 8a, the power supply conversion unit 9a, a power feeding apparatus wireless communication unit 12a, and a sensor detection unit 13a. A power feeding apparatus antenna 14a is electrically connected to the power feeding apparatus wireless communication unit 12a. A magnetic sensor 15a is electrically connected to the sensor detection unit 13a. The other two charging stations 2b, 2c respectively include power feeding apparatuses 4b, 4c (see Fig. 1) configured identically to the power feeding apparatus 4a.

Fig. 2(b) shows a configuration of the charging apparatus 5. The power reception coil 7 is electrically connected to a charging apparatus matching unit 16. The charging apparatus matching unit 16 is electrically connected to a rectification unit 17. The rectification unit 17 is electrically connected to a detection unit 18 provided on the exterior of the charging apparatus 5. The detection unit 18 is electrically connected to a battery unit 19 provided on the exterior of the charging apparatus 5. A charging apparatus control apparatus 20 is electrically connected to the charging apparatus matching unit 16, the rectification unit 17, the detection unit 18, the battery unit 19, a charging apparatus wireless communication unit 21, and an excitation control unit 22. A charging apparatus antenna 23 is electrically connected to the charging apparatus wireless communication unit 21. An excitation coil 24 is electrically connected to the excitation control unit 22. The magnetic sensor 15a (see Fig. 2 (a)) and the excitation coil 24 are appropriately disposed on, for example, the floor surface or the like of the charging station 2a, and the bottom surface or the like of the vehicle 3, so that when the vehicle 3 is parked in the predetermined parking position of the charging station 2a (see Fig. 1), the magnetic sensor 15a and the excitation coil 24 are within a range where an output magnetic field of the excitation coil 24 can be detected by the magnetic sensor 15a, for example in positions opposed to each other while maintaining a predetermined air gap or the like.

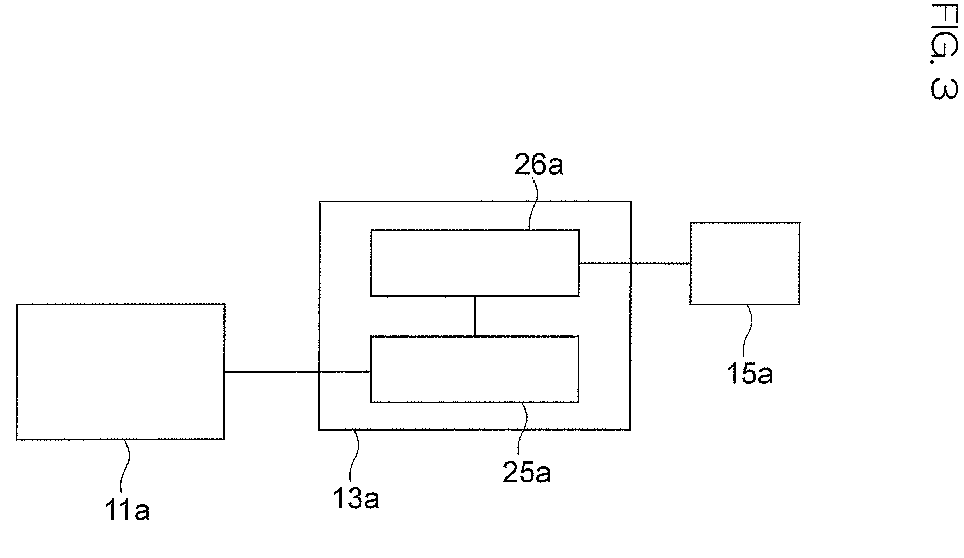

Fig. 3 shows a configuration of the sensor detection unit 13a. A determination circuit 25a and a detection circuit 26a are provided in the interior of the sensor detection unit 13a. The power feeding apparatus control apparatus 11a is electrically connected to the determination circuit 25a, the determination circuit 25a is electrically connected to the detection circuit 26a, and the detection circuit 26a is electrically connected to the magnetic sensor 15a.

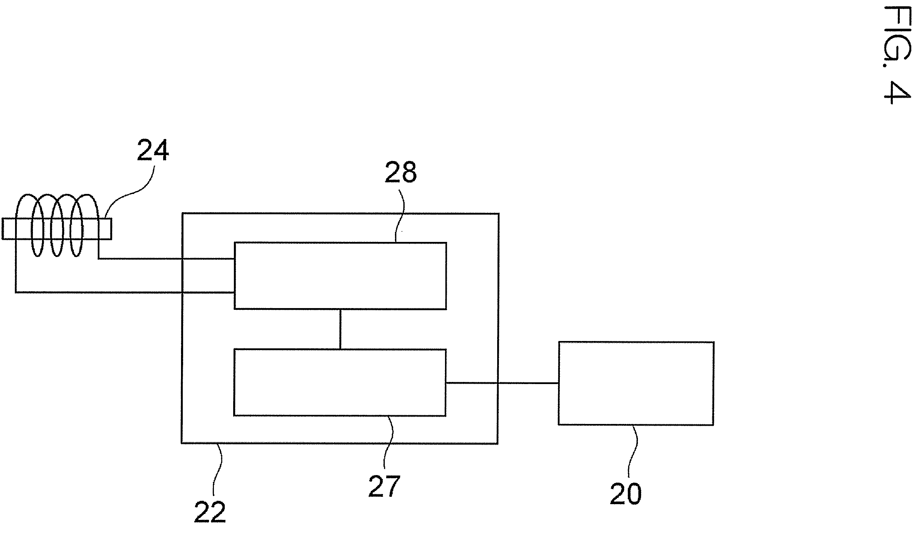

Fig. 4 shows a configuration of the excitation control unit 22. An amplitude control circuit 27 and an oscillation circuit 28 are provided in the interior of the excitation control unit 22. The charging apparatus control apparatus 20 is electrically connected to the amplitude control circuit 27, the amplitude control circuit 27 is electrically connected to the oscillation circuit 28, and the oscillation circuit 28 is electrically connected to the excitation coil 24.

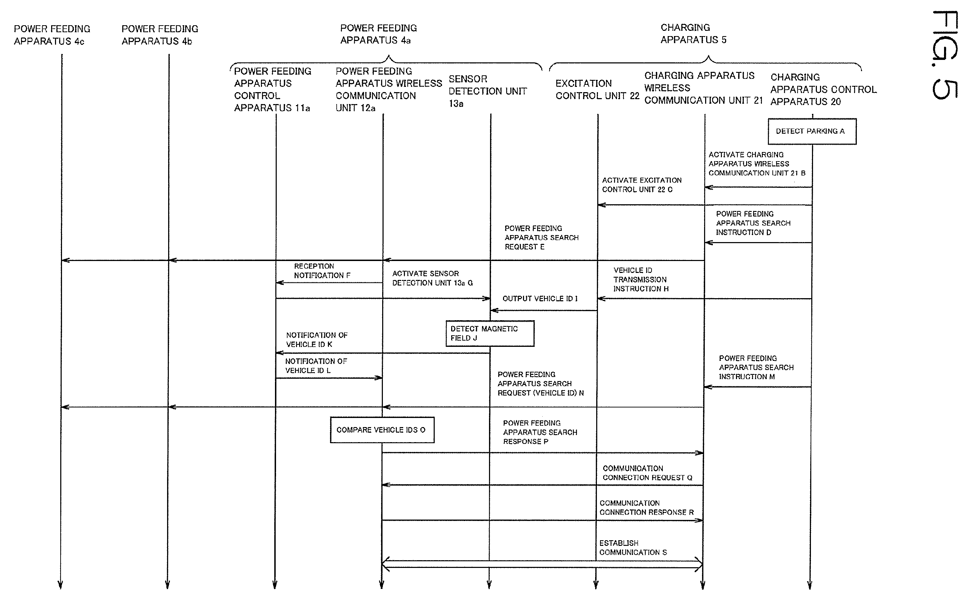

Next, an operation of the noncontact charging system according to the first embodiment of the present invention will be described with reference to Figs. 2 to 6. Fig. 5 shows an example sequence of the noncontact charging system. When the vehicle 3 is parked in the predetermined parking position of the charging station 2a, the charging apparatus control apparatus 20 detects that the vehicle 3 has been parked (A). Any desired means, such as means for detecting an operation of a parking brake of the vehicle 3 or means for detecting that a travel power supply switch of the vehicle 3 has been switched, may be used as means for detecting the parking at this time.

When the charging apparatus control apparatus 20 detects that the vehicle 3 has been parked, the charging apparatus control apparatus 20 starts the charging apparatus wireless communication unit 21 (B) and the excitation control unit 22 (C), and issues a power feeding apparatus search instruction to the charging apparatus wireless communication unit 21 (D). The charging apparatus wireless communication unit 21 having received the power feeding apparatus search instruction outputs a power feeding apparatus search request as a broadcast via the charging apparatus antenna 23 (E). A power feeding apparatus search request signal transmitted at this time includes a MAC address of the charging apparatus wireless communication unit 21. When the power feeding apparatus wireless communication unit 12a receives the power feeding apparatus search request via the power feeding apparatus antenna 14a of the power feeding apparatus 4a, the power feeding apparatus wireless communication unit 12a transmits a reception notification to the power feeding apparatus control apparatus 11a (F). The power feeding apparatus control apparatus 11a then start the sensor detection unit 13a (G). The respective power feeding apparatuses 4b, 4c also perform the operations (F) and (G) upon receiving the power feeding apparatus search request.

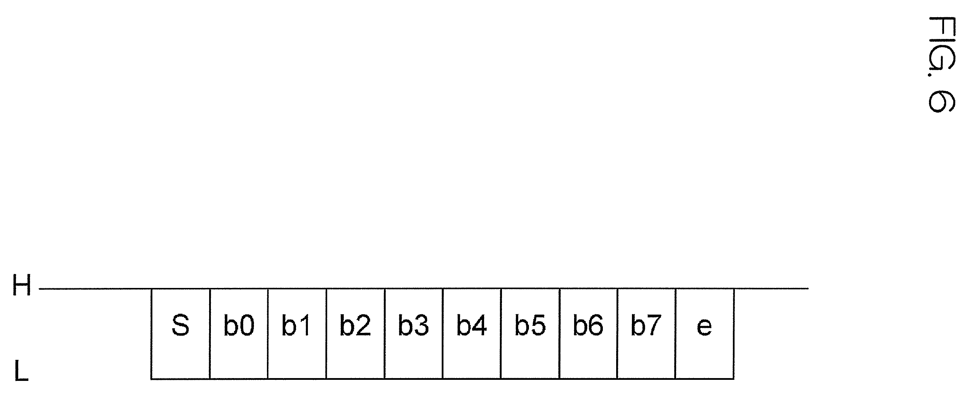

Next, the charging apparatus control apparatus 20 transmits a vehicle ID transmission instruction to the excitation control unit 22 (H). As shown in Fig. 6, in the vehicle ID, each datum is set at a Low level [L] when each datum is present, and each datum is set at a High level [H] when each datum is not present. A single bit at the start of the data is set as a start bit [s], after which data to be transmitted are arranged in sequence from a second bit onward, and a stop bit [e] is added to the end. In this example, the vehicle ID includes eight bits, but other bit lengths may be used. In the excitation control unit 22, as shown in Fig. 4, the amplitude control circuit 27 receives the vehicle ID from the charging apparatus control apparatus 20, varies an amplitude of an alternating current voltage in accordance with the data, and controls the oscillation circuit 28 to generate the alternating current voltage and apply the alternating current voltage to the excitation coil 24. Here, the amplitude of the alternating current voltage is controlled, but a method of controlling a High/Low condition of the voltage or controlling an ON/OFF condition of a current may be adopted. In all cases, the data of the vehicle ID are output from the excitation coil 24 as a magnetic field change. In other words, the excitation control unit 22 uses a magnetic field to output the vehicle ID (see Fig. 5, I).

When the vehicle 3 is parked at the charging station 2a, the excitation coil 24 and the magnetic sensor 15a are positioned within a range where the magnetic sensor 15a can detect the output magnetic field of the excitation coil 24, and therefore, as shown in Fig. 3, an analog signal is output from the magnetic sensor 15a to the sensor detection unit 13a in accordance with the change in the magnetic field generated by the excitation coil 24, whereby the data of the vehicle ID appears as a change in the output voltage. The detection circuit 26a of the sensor detection unit 13a converts the data into a High/Low digital signal by threshold processing, and transmits the High/Low digital signal to the determination circuit 25a of the sensor detection unit 13a. In the determination circuit 25a, the data is determined from the digital signal and interpreted as the vehicle ID. Thus, the sensor detection unit 13a performs magnetic field detection (J) to obtain the vehicle ID outputted from the excitation control unit 22, as shown in Fig. 5, by detecting the signal from the magnetic sensor 15a. Information is transmitted from the excitation control unit 22 to the sensor detection unit 13a through magnetic communication by outputting the vehicle ID (I) and performing magnetic field detection (J). The vehicle ID is output from the determination circuit 25a (see Fig. 3), whereby the sensor detection unit 13a notifies the power feeding apparatus control apparatus 11a of the vehicle ID (K). The power feeding apparatus control apparatus 11a then notifies the power feeding apparatus wireless communication unit 12a of the vehicle ID (L).

The charging apparatus control apparatus 20 transmits a power feeding apparatus search instruction to the charging apparatus wireless communication unit 21 (M). The charging apparatus wireless communication unit 21 having received the power feeding apparatus search request outputs a power feeding apparatus search request together with the vehicle ID as a broadcast via the charging apparatus antenna 23 (N). The power feeding apparatus wireless communication unit 12a receives the power feeding apparatus search request via the power feeding apparatus antenna 14a of the power feeding apparatus 4a. At this time, power feeding apparatuses 4b, 4c also receive the power feeding apparatus search request. As described above, the power feeding apparatus wireless communication unit 12a of the power feeding apparatus 4a is notified of the vehicle ID in advance by magnetic communication via the sensor detection unit 13a, and therefore the power feeding apparatus wireless communication unit 12a compares the received vehicle ID with the previously notified vehicle ID (O). At this time, respective power feeding apparatus wireless communication units (not shown) of the power feeding apparatuses 4b, 4c have not been notified of the vehicle ID by magnetic communication, and do not therefore perform the ID comparison. When the received vehicle ID matches the previously notified vehicle ID, the power feeding apparatus wireless communication unit 12a outputs a power feeding apparatus search response as a unicast using the received MAC address of the charging apparatus wireless communication unit 21 via the power feeding apparatus antenna 14a (P). A power feeding apparatus search response signal transmitted at this time includes a MAC address of the power feeding apparatus wireless communication unit 12a. The power feeding apparatus search response is received by the charging apparatus wireless communication unit 21 via the charging apparatus antenna 23, and the charging apparatus wireless communication unit 21 outputs a communication connection request as a unicast via the charging apparatus antenna 23 using the received MAC address of the power feeding apparatus wireless communication unit 12a (Q). The power feeding apparatus wireless communication unit 12a receives the communication connection request via the power feeding apparatus antenna 14a, and outputs a communication connection response as a unicast via the power feeding apparatus antenna 14a (R). The charging apparatus wireless communication unit 21 receives the communication connection response via the charging apparatus antenna 23, whereby wireless communication is established between the power feeding apparatus wireless communication unit 12a of the charging station 2a and the charging apparatus wireless communication unit 21 of the vehicle 3 (S).

As shown in Figs. 2(a) and 2(b), after wireless communication is established, the voltage and frequency of the power supplied from the alternating current power supply 10a is converted by the power supply conversion unit 9a, impedance matching between the power feeding apparatus matching unit 8a and the charging apparatus matching unit 16 is performed, and then the alternating power current supply 10a supplies the power to the power feeding coil 6a. Charging power is generated in the power reception coil 7 which is opposed to the power feeding coil 6a while maintaining a predetermined air gap by an electromagnetic induction interaction. The charging power is rectified by the rectification unit 17 via the charging apparatus matching unit 16, and then charged to the battery unit 19 via the detection unit 18 that is used to detect a voltage and a current.

By comparing the vehicle ID transmitted between the excitation coil 24 and the magnetic sensor 15a with the vehicle ID transmitted between the power feeding apparatus wireless communication unit 12a and the charging apparatus wireless communication unit 21 in this manner, the vehicle 3 is able to easily and reliably specify the charging station 2a with which it should establish a wireless communication connection, among the plurality of charging stations 2a, 2b, 2c.

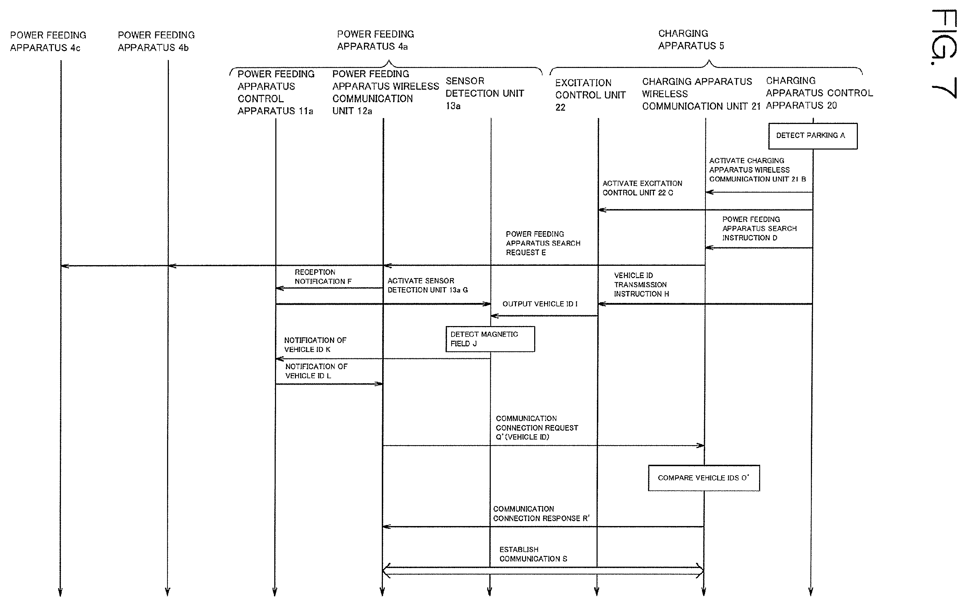

In the first embodiment, the communication connection request is output by the charging apparatus wireless communication unit 21 of the charging apparatus 5, but a sequence in which the communication connection request is output from the power feeding apparatus wireless communication unit 12a of the power feeding apparatus 4a may be adopted. Fig. 7 shows an example of the sequence in which the communication connection request is output from the power feeding apparatus wireless communication unit 12a of the power feeding apparatus 4a. The sequence is identical to the first embodiment up to the point at which magnetic communication is performed between the excitation control unit 22 and the sensor detection unit 13a (I), the power feeding apparatus control apparatus 11a is notified of the vehicle ID (K) and the power feeding apparatus control apparatus 11a notifies the power feeding apparatus wireless communication unit 12a of the vehicle ID (L). After the power feeding apparatus wireless communication unit 12a is notified of the vehicle ID, the power feeding apparatus wireless communication unit 12a outputs a communication connection request together with the vehicle ID as a unicast via the power feeding apparatus antenna 14a using the received MAC address of the charging apparatus wireless communication unit 21 (Q'). At this time, the communication connection request signal includes the MAC address of the power feeding apparatus wireless communication unit 12a. After the charging apparatus wireless communication unit 21 receives the communication connection request together with the vehicle ID via the charging apparatus antenna 23, it compares the received vehicle ID with the vehicle ID of the vehicle 3 (O'). When the vehicle IDs match, the charging apparatus wireless communication unit 21 outputs a communication connection response as a unicast via the charging apparatus antenna 23 using the received MAC address of the power feeding apparatus wireless communication unit 12a (R'). The power feeding apparatus wireless communication unit 12a receives the communication connection response via the power feeding apparatus antenna 14a, whereby wireless communication is established between the power feeding apparatus 4a of the charging station 2a and the charging apparatus 5 of the vehicle 3 (S).

### Second Embodiment

Next, a configuration of a noncontact charging system according to a second embodiment of the present invention will be described. In the following embodiments which are described below, because the reference numerals which are the same as the reference numerals shown in Figs. 1 to 7 indicate the same or similar constituent elements, the detailed descriptions thereof are omitted.

The noncontact charging system according to the second embodiment of the present invention differs from the first embodiment in that the respective parts are disposed differently.

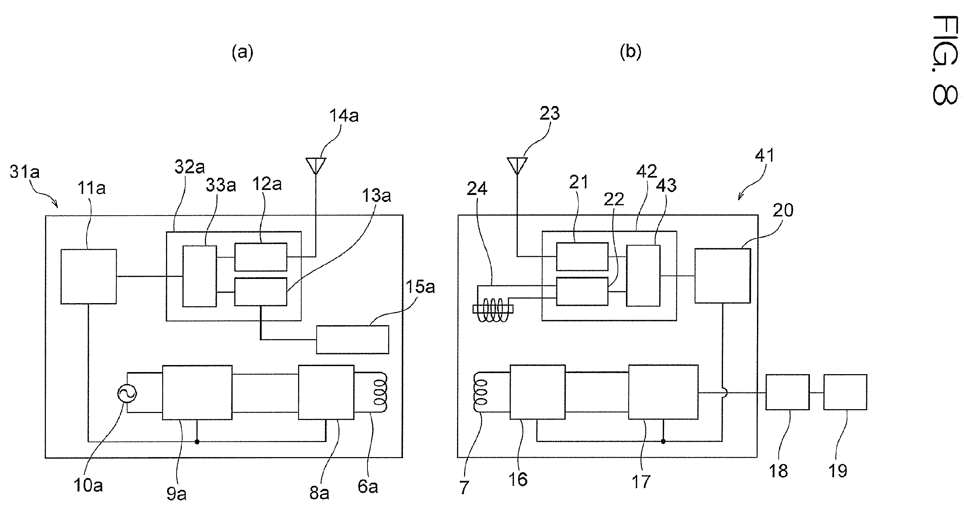

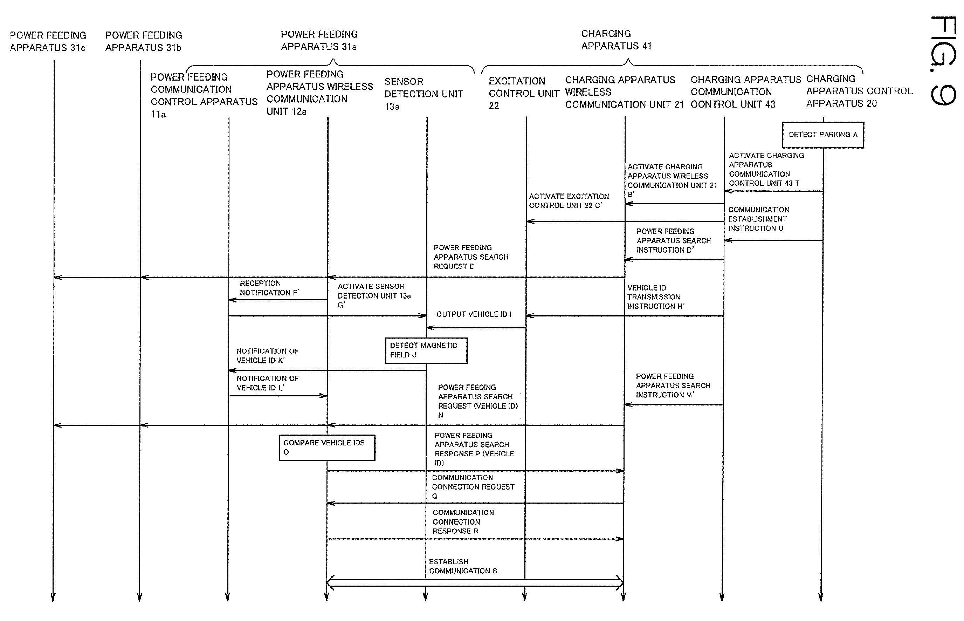

Similarly to the first embodiment, the three charging stations 2a, 2b, 2c are provided. Fig. 8 (a) shows a configuration of a power feeding apparatus 31a of the charging station 2a which is one of the three charging stations 2a, 2b, 2c. The power feeding apparatus wireless communication unit 12a, the sensor detection unit 13a, and a power feeding apparatus communication control unit 33a are provided in the interior of a power feeding apparatus communication unit 32a. The power feeding apparatus control apparatus 11a is electrically connected to the power feeding apparatus communication control unit 33a. The power feeding apparatus wireless communication unit 12a is electrically connected to the power feeding apparatus communication control unit 33a. The sensor detection unit 13a is electrically connected to the power feeding apparatus communication control unit 33a. The other two charging stations 2b, 2c are also configured so as to include power feeding apparatuses 31b, 31c (see Fig. 9) that are configured similarly to the power feeding apparatus 31a. All other configurations are identical to the first embodiment.

Fig. 8(b) shows a configuration of a charging apparatus 41. The charging apparatus wireless communication unit 21, the excitation control unit 22, and a charging apparatus communication control unit 43 are provided in the interior of a charging apparatus communication unit 42. The charging apparatus control apparatus 20 is electrically connected to the charging apparatus communication control unit 43. The charging apparatus wireless communication unit 21 is electrically connected to the charging apparatus communication control unit 43. The excitation control unit 22 is electrically connected to the charging apparatus communication control unit 43. All other configurations are identical to the first embodiment.

Next, an operation of the noncontact charging system according to the second embodiment of the present invention will be described.

Fig. 9 shows an example of the sequence of the second embodiment. In Fig. 9, the alphabetic characters identical to those in Fig. 5 refer to identical operations, the alphabetic characters with an apostrophe refer to operations which modify the operations of the same alphabetic characters in Fig. 5, and the alphabetic characters not shown in Fig. 5 refer to operations performed only in the second embodiment. When the charging apparatus control apparatus 20 detects that the vehicle 3 has been parked (A) similarly to the first embodiment, the charging apparatus control apparatus 20 starts the charging apparatus communication control unit 43 (T). The charging apparatus communication control unit 43 then starts the charging apparatus wireless communication unit 21 (B') and the excitation control unit 22 (C'). The charging apparatus control apparatus 20 then transmits a communication establishment instruction to which the vehicle ID is attached to the charging apparatus communication control unit 43 (U). The charging apparatus communication control unit 43 transmits a power feeding apparatus search instruction to the charging apparatus wireless communication unit 21 (D'). The charging apparatus wireless communication unit 21 having received the power feeding apparatus search instruction outputs a power feeding apparatus search request as a broadcast via the charging apparatus antenna 23 (E). At this time, the power feeding apparatus search request signal includes the MAC address of the charging apparatus wireless communication unit 21. When the power feeding apparatus search request is received by the power feeding apparatus wireless communication unit 12a via the power feeding apparatus antenna 14a of the power feeding apparatus 31a, the power feeding apparatus wireless communication unit 12a transmits a reception notification to the power feeding apparatus communication control unit 33a (F'). The power feeding apparatus communication control unit 33a then starts the sensor detection unit 13a (G'). The respective power feeding apparatuses 31b, 31c also perform the operations (F') and (G') upon receipt of the power feeding apparatus search request.

Next, the charging apparatus communication control unit 43 transmits a vehicle ID transmission instruction to the excitation control unit 22 (H'). The excitation control unit 22 outputs the vehicle ID, and the magnetic sensor 15a detects the magnetic field generated by the excitation coil 24 (I). In other words, the sensor detection unit 13a performs magnetic field detection (J) such that magnetic communication is established, and as a result, the vehicle ID is received by the sensor detection unit 13a, and the sensor detection unit 13a notifies the power feeding apparatus communication control unit 33a of the vehicle ID (K'). The power feeding apparatus communication control unit 33a then notifies the power feeding apparatus wireless communication unit 12a of the vehicle ID (L'). The charging apparatus communication control unit 43 then transmits a power feeding apparatus search instruction to the charging apparatus wireless communication unit 21 (M'). The charging apparatus wireless communication unit 21 having received the power feeding apparatus search instruction outputs a power feeding apparatus search request together with the vehicle ID as a broadcast via the charging apparatus antenna 23 (N). The power feeding apparatus wireless communication unit 12a receives the power feeding apparatus search request via the power feeding apparatus antenna 14a of the power feeding apparatus 31a. At this time, the power feeding apparatuses 31b, 31c also receive the power feeding apparatus search request.

The power feeding apparatus wireless communication unit 12a compares the received vehicle ID with the previously notified vehicle ID (O). At this time, the respective power feeding apparatus wireless communication units (not shown) of the power feeding apparatuses 31b, 31c have not been notified of the vehicle ID by magnetic communication, and do not therefore perform the comparison. When the received vehicle ID matches the previously notified vehicle ID, the power feeding apparatus wireless communication unit 12a outputs a power feeding apparatus search response as a unicast using the received MAC address of the charging apparatus wireless communication unit 21 via the power feeding apparatus antenna 14a (P). The power feeding apparatus search response signal transmitted at this time includes the MAC address of the power feeding apparatus wireless communication unit 12a. The power feeding apparatus search response is received by the charging apparatus wireless communication unit 21 via the charging apparatus antenna 23, and the charging apparatus wireless communication unit 21 outputs a communication connection request as a unicast via the charging apparatus antenna 23 using the received MAC address of the power feeding apparatus wireless communication unit 12a (Q). The power feeding apparatus wireless communication unit 12a receives the communication connection request via the power feeding apparatus antenna 14a, and outputs a communication connection response as a unicast via the power feeding apparatus antenna 14a (R). The charging apparatus wireless communication unit 21 receives the communication connection response via the charging apparatus antenna 23, whereby wireless communication is established between the power feeding apparatus 31a of the charging station 2a and the charging apparatus 41 of the vehicle 3 (S). The charging operation performed after establishing wireless communication is identical to the first embodiment.

By providing the power feeding apparatus communication unit 32a and the charging apparatus communication unit 42, integrally providing the power feeding apparatus communication unit 32a with the power feeding apparatus wireless communication unit 12a, the sensor detection unit 13a, and the power feeding apparatus communication control unit 33a that controls these units, and integrally providing the charging apparatus communication unit 42 with the charging apparatus wireless communication unit 21, the excitation control unit 22, and the charging apparatus communication control unit 43 that controls these units, the controls of the wireless communication and the magnetic communication can be consolidated, and the configurations of the parts of the power feeding apparatus and the charging apparatus used for the wireless communication and the magnetic communication can be simplified, enabling reductions in size and cost. Furthermore, it is possible to switch between the wireless communication and the magnetic communication without passing through a control apparatus, and therefore the time required for the switching control can be shortened.

In the second embodiment, the communication connection request is output by the charging apparatus wireless communication unit 21 of the charging apparatus 41, but similarly to the modified example (see Fig. 7) of the first embodiment, a sequence in which the communication connection request is output from the power feeding apparatus wireless communication unit 12a of the power feeding apparatus 31a may be adopted.

### Third Embodiment

Next, a configuration of a noncontact charging system according to a third embodiment of the present invention will be described.

The noncontact charging system according to the third embodiment of the present invention differs from the second embodiment in that the excitation coil is disposed on the power feeding apparatus side and the magnetic sensor is disposed on the charging apparatus side.

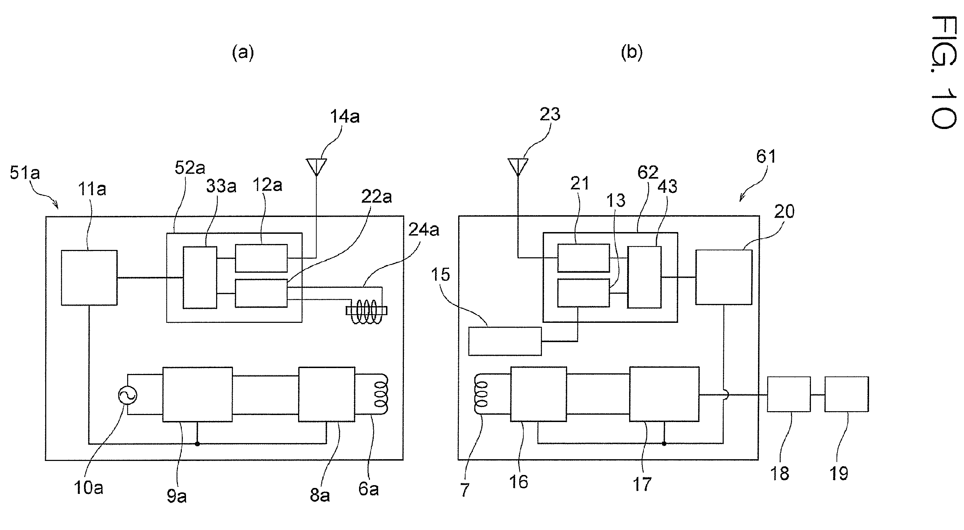

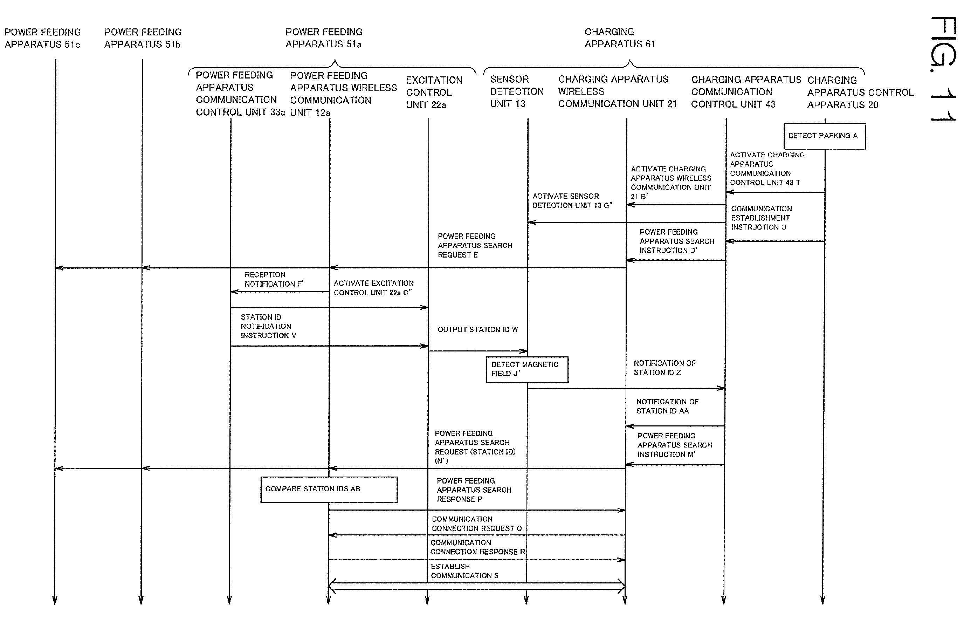

Fig. 10(a) shows a configuration of a power feeding apparatus 51a of the charging station 2a. An excitation coil 24a is provided in the power feeding apparatus 51a. An excitation control unit 22a is provided in a power feeding apparatus communication unit 52a. The excitation coil 24a is electrically connected to the excitation control unit 22a. The excitation control unit 22a is electrically connected to the power feeding apparatus communication control unit 33a. The other two charging stations 2b, 2c are also configured so as to include power feeding apparatuses 51b, 51c (see Fig. 11) that are configured similarly to the power feeding apparatus 51a. All other configurations are identical to the second embodiment.

Fig. 10(b) shows a configuration of a charging apparatus 61. A magnetic sensor 15 is provided in the charging apparatus 61. A sensor detection unit 13 is provided in a charging apparatus communication unit 62. The magnetic sensor 15 is electrically connected to the sensor detection unit 13. The sensor detection unit 13 is electrically connected to the charging apparatus communication control unit 43. All other configurations are identical to the second embodiment.

Next, an operation of the noncontact charging system according to the third embodiment of the present invention will be described.

Fig. 11 shows an example of the sequence of the third embodiment. In Fig. 11, the alphabetic characters identical to those in Fig. 5 and 9 refer to identical operations, the alphabetic characters with an apostrophe or a double quotation mark refer to operations which modify the operations of the same alphabetic characters in Fig. 5 and 9, and the alphabetic characters not shown in Fig. 5 and Fig. 9 refer to operations performed only in the third embodiment. When the charging apparatus control apparatus 20 detects that the vehicle 3 has been parked (A) similarly to the second embodiment, the charging apparatus control apparatus 20 starts the charging apparatus communication control unit 43 (T). The charging apparatus communication control unit 43 then starts the charging apparatus wireless communication unit 21 (B') and the sensor detection unit 13 (G"). The charging apparatus control apparatus 20 then transmits a communication establishment instruction to the charging apparatus communication control unit 43 (U). The charging apparatus communication control unit 43 transmits a power feeding apparatus search instruction to the charging apparatus wireless communication unit 21 (D'). The charging apparatus wireless communication unit 21 having received the power feeding apparatus search instruction outputs a power feeding apparatus search request as a broadcast via the charging apparatus antenna 23 (E). At this time, the power feeding apparatus search request signal includes the MAC address of the charging apparatus wireless communication unit 21. When the power feeding apparatus search request is received by the power feeding apparatus wireless communication unit 12a via the power feeding apparatus antenna 14a of the power feeding apparatus 51a, the power feeding apparatus wireless communication unit 12a transmits a reception notification to the power feeding apparatus communication control unit 33a (F'). The power feeding apparatus communication control unit 33a then starts the excitation control unit 22a (C"). The respective power feeding apparatuses 51b, 51c also perform the operations (F') and (C") upon receiving of the power feeding apparatus search request.

Next, the power feeding apparatus communication control unit 33a transmits a station ID notification instruction to the excitation control unit 22a (V). The excitation control unit 22a outputs a station ID (W), and the magnetic sensor 15 detects a magnetic field generated by the excitation coil 24a. In other words, the sensor detection unit 13a performs magnetic field detection (J') such that magnetic communication is established, and as a result, the station ID is received by the sensor detection unit 13, and the sensor detection unit 13 notifies the charging apparatus communication control unit 43 of the station ID (Z). The charging apparatus communication control unit 43 then notifies the charging apparatus wireless communication unit 21 of the station ID (AA). The charging apparatus communication control unit 43 then transmits a power feeding apparatus search instruction to the charging apparatus wireless communication unit 21 (M'). The charging apparatus wireless communication unit 21 having received the power feeding apparatus search instruction outputs a power feeding apparatus search request together with the vehicle ID as a broadcast via the charging apparatus antenna 23 (N'). The power feeding apparatus wireless communication unit 12a receives the power feeding apparatus search request via the power feeding apparatus antenna 14a of the power feeding apparatus 51a. At this time, the power feeding apparatus search request is also received by the power feeding apparatuses 51b, 51c.

The power feeding apparatus wireless communication unit 12a compares the received station ID with the station ID of the charging station 2a (AB). When the received station ID matches the station ID of the charging station 2a, the power feeding apparatus wireless communication unit 12a outputs a power feeding apparatus search response as a unicast using the MAC address of the charging apparatus wireless communication unit 21 via the power feeding apparatus antenna 14a (P). The power feeding apparatus search response signal output at this time includes the MAC address of the power feeding apparatus wireless communication unit 12a. Further, at this time, the station ID received by the respective power feeding apparatus wireless communication units (not shown), of the power feeding apparatuses 51b, 51c is also compared with the station IDs of the respective charging stations in which the power feeding apparatuses 51b, 51c are provided. However, since the station IDs do not match each other, no further operations are performed. The power feeding apparatus search response is received by the charging apparatus wireless communication unit 21 via the charging apparatus antenna 23, and the charging apparatus wireless communication unit 21 outputs a communication connection request as a unicast via the charging apparatus antenna 23 using the previously received MAC address of the power feeding apparatus wireless communication unit 12a (Q). The power feeding apparatus wireless communication unit 12a receives the communication connection request via the power feeding apparatus antenna 14a, and outputs a communication connection response as a unicast via the power feeding apparatus antenna 14a (R). The charging apparatus wireless communication unit 21 receives the communication connection response via the charging apparatus antenna 23, whereby wireless communication is established between the power feeding apparatus 51a of the charging station 2a and the charging apparatus 61 of the vehicle 3 (S). The charging operation performed after establishing wireless communication is identical to the first embodiment.

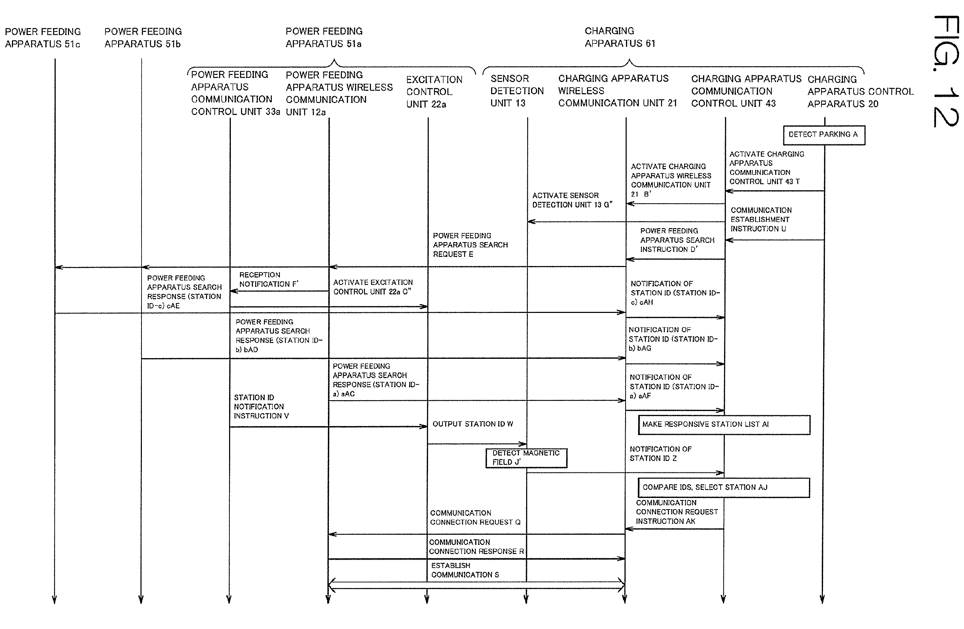

A different sequence may be adopted in the third embodiment. Fig. 12 shows an another example of the sequence of the third embodiment. In Fig. 12, the alphabetic characters identical to those in Fig. 5, 9, and 11 refer to identical operations, the alphabetic characters with an apostrophe or a double quotation mark refer to operations which modify the operations of the same alphabetic characters in Fig. 5, Fig. 9, and Fig. 11, and the alphabetic characters not shown in Figs. 5, 9, and 11 refer to operations performed only in the third embodiment. Operations up to the point at which the power feeding apparatus communication control unit 33a starts the excitation control unit 22a (C") are identical to the third embodiment. Next, the power feeding apparatus wireless communication unit 12a outputs a power feeding apparatus search response a including the station ID and the MAC address of the power feeding apparatus wireless communication unit 12a of the charging station 2a as a unicast using the received MAC address of the charging apparatus wireless communication unit 21 via the power feeding apparatus antenna 14a (AC). Also, in the power feeding apparatus 51b, the power feeding apparatus wireless communication unit outputs a power feeding apparatus search response b including the station ID and the MAC address of the power feeding apparatus wireless communication unit of the charging station 2b as a unicast using the received MAC address of the charging apparatus wireless communication unit 21 via the power feeding apparatus antenna (AD). Also, in the power feeding apparatus 51c, the power feeding apparatus wireless communication unit outputs a power feeding apparatus search response c including the station ID and the MAC address of the power feeding apparatus wireless communication unit of the charging station 2c as a unicast using the received MAC address of the charging apparatus wireless communication unit 21 via the power feeding apparatus antenna (AE).

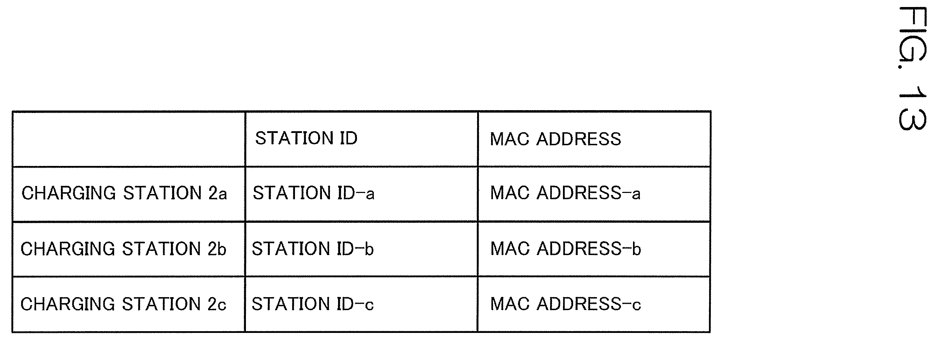

The charging apparatus wireless communication unit 21 having received the respective station IDs and MAC addresses of the three charging stations via the charging apparatus antenna 23 notifies the charging apparatus communication control unit 43 of the station IDs and MAC addresses of the respective charging stations (AF, AG, AH). The charging apparatus communication control unit 43 then makes a responsive charging station list of the stations from which a response has been received (AI). Fig. 13 shows an example of the responsive charging station list. The IDs and MAC addresses of the charging stations 2 are stored correspondently in the responsive charging station list such that they correspond to each other.

As shown in Fig. 12, the power feeding apparatus communication control unit 33a transmits a station ID notification instruction to the excitation control unit 22a (V). The excitation control unit 22a outputs the station ID (W), and the magnetic sensor 15 detects the magnetic field generated by the excitation coil 24a, whereby, the sensor detection unit 13 performs magnetic field detection (J') such that magnetic communication is established, and as a result, the station ID is received by the sensor detection unit 13, and the sensor detection unit 13 notifies the charging apparatus communication control unit 43 of the station ID (Z). At this time, the station ID notification instruction is also output from the power feeding apparatus communication control units to the excitation control units of the respective power feeding apparatuses 51b, 51c, and the respective excitation control units output the station IDs. However, because the respective excitation coils of the charging stations 2b, 2c are sufficiently distanced from the magnetic sensor 15 of the vehicle 3, the sensor detection unit 13 does not detect the magnetic fields as stand IDs output from the respective excitation control units. The charging apparatus communication control unit 43 then compares the received station ID with the responsive charging station list, and selects a single matching station (in this case, the charging station 2a) (AJ).

Because the MAC address allocated to the power feeding apparatus wireless communication unit 12a of the charging station 2a is stored in the responsive charging station list, the charging apparatus communication control unit 43 issues a communication connection request instruction to the charging apparatus wireless communication unit 21 to output a communication connection request to the power feeding apparatus communication unit 52a using the MAC address allocated to the power feeding apparatus wireless communication unit 12a (AK). The charging apparatus wireless communication unit 21 then outputs a communication connection request to the power feeding apparatus wireless communication unit 12a as a unicast via the charging apparatus antenna 23 (Q). The power feeding apparatus wireless communication unit 12a receives the communication connection request via the power feeding apparatus antenna 14a, and outputs a communication connection response via the power feeding apparatus antenna 14a (R). The charging apparatus wireless communication unit 21 receives the communication connection response via the charging apparatus antenna 23, whereby wireless communication is established between the power feeding apparatus 51a of the charging station 2a and the charging apparatus 61 of the vehicle 3 (S).

By disposing the excitation coil 24a on the power feeding apparatus 51a side, disposing the magnetic sensor 15 on the charging apparatus 61 side, and making a list of one of the charging stations 2a, 2b, 2c, which responds to the power feeding apparatus search request by the charging apparatus communication control unit 43 of the charging apparatus 61as described above, the power feeding apparatus 31a that establishes wireless communication can be specified, a number of communication procedures can be reduced, and the time required to establish wireless communication can be shortened.

In the third embodiment, the power feeding apparatus communication unit 52a and the charging apparatus communication unit 62 are provided, but instead of providing these units, the power feeding apparatus wireless communication unit 12a and the excitation control unit 22a may be provided independently and the charging apparatus wireless communication unit 21 and the sensor detection unit 13 may be provided independently, similarly to the first embodiment.

In the first to third embodiments, although only a single magnetic sensor 15, sensor detection unit 13, excitation coil 24a, and excitation control unit 22a are each provided respectively, a plurality of each may be provided in equal numbers. In this case, detection results obtained during the magnetic communication can be handled as valid data only when the detection results from all of the plurality of magnetic sensors 15 match, and as a result, the reliability of the data read during the magnetic communication can be improved.

### Fourth Embodiment

Next, a configuration of a noncontact charging system according to a fourth embodiment of the present invention will be described.

The noncontact charging system according to the fourth embodiment of the present invention differs from the second embodiment in that the magnetic communication performed between the excitation coil and the magnetic sensor is modified to wireless communication using antennas.

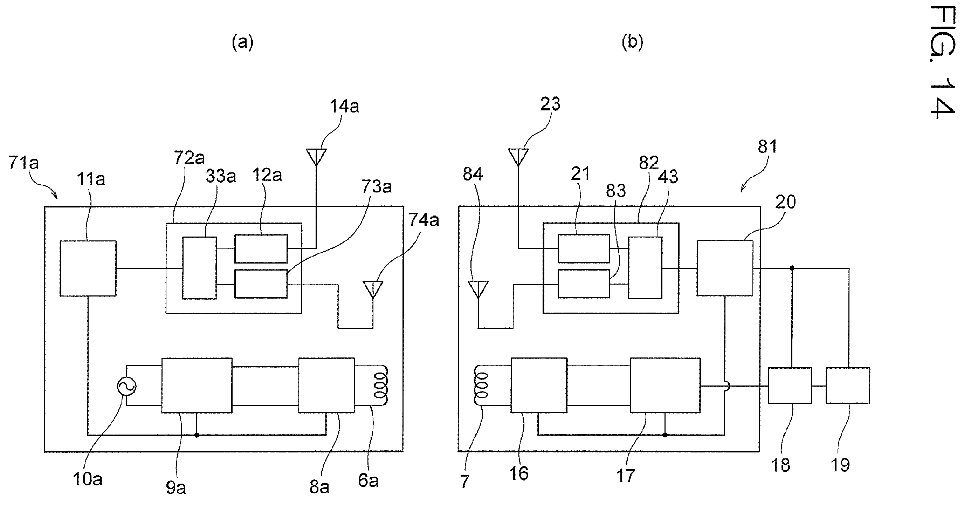

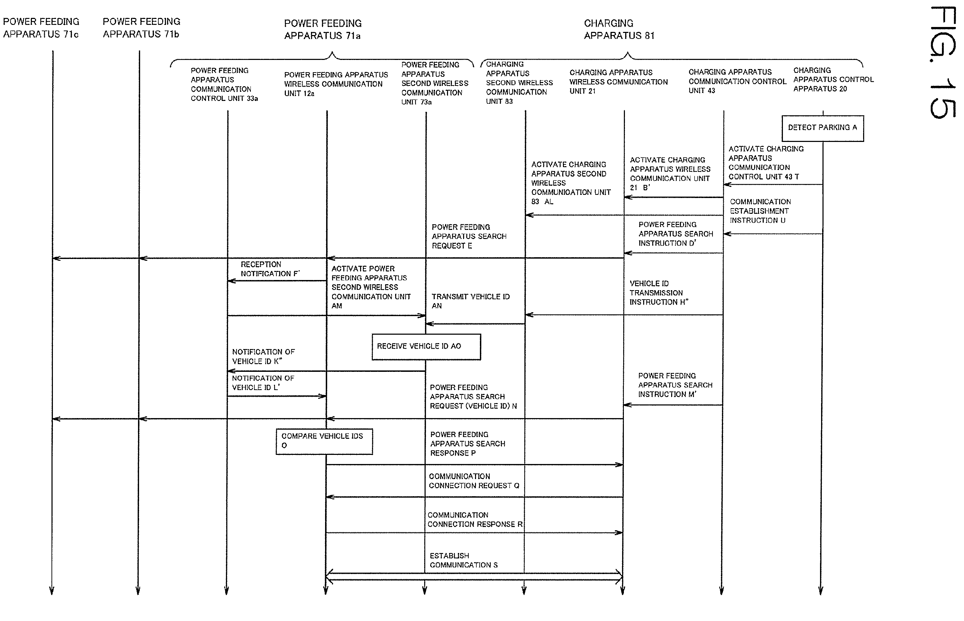

Fig. 14 (a) shows a configuration of a power feeding apparatus 71a. A power feeding apparatus communication unit 72a and a power feeding apparatus second antenna 74a are provided in the power feeding apparatus 71a. A power feeding apparatus second wireless communication unit 73a, the power feeding apparatus wireless communication unit 12a, and the power feeding apparatus communication control unit 33a are provided in the interior of the power feeding apparatus communication unit 72a. The power feeding apparatus communication control unit 33a is electrically connected to the power feeding apparatus second wireless communication unit 73a. The power feeding apparatus second wireless communication unit 73a is electrically connected to the power feeding apparatus second antenna 74a. All other configurations are identical to the second embodiment. The other two charging stations 2b, 2c (see Fig. 1) also include power feeding apparatuses 71b, 71c (see Fig. 15) that are configured similarly to the power feeding apparatus 71a.

Fig. 14(b) shows a configuration of a charging apparatus 81. A charging apparatus communication unit 82 and a charging apparatus second antenna 84 are provided in the charging apparatus 81. A charging apparatus second wireless communication unit 83, the charging apparatus wireless communication unit 21, and the charging apparatus communication control unit 43 are provided in the interior of the charging apparatus communication unit 82. The charging apparatus communication control unit 43 is electrically connected to the charging apparatus second wireless communication unit 83. The charging apparatus second wireless communication unit 83 is electrically connected to the charging apparatus second antenna 84. The power feeding apparatus second antenna 74a (see Fig. 14(a)) and the charging apparatus second antenna 84 are appropriately disposed on, for example the floor surface or the like of the charging station 2a and the bottom surface or the like of the vehicle 3,so that when the vehicle 3 is parked in the predetermined parking position of the charging station 2a (see Fig. 1), the power feeding apparatus second antenna 74a and the charging apparatus second antenna 84 are positioned within a limited communication range where no interference with an adjacent vehicle occurs. All other configurations are identical to the second embodiment.

Next, operation of the noncontact charging system according to the fourth embodiment of the present invention will be described.

Fig. 15 shows an example of the sequence of the fourth embodiment. In Fig. 15, the alphabetic characters identical to those in Fig. 5 and 9 refer to identical operations, the alphabetic characters with an apostrophe or a double quotation mark refer to operations which modify the operations of the same alphabetic characters in Fig. 5 and Fig. 9, and the alphabetic characters not shown in Figs. 5 and 9 refer to operations performed only in the fourth embodiment. When the charging apparatus control apparatus 20 detects that the vehicle 3 has been parked (A) similarly to the second embodiment, the charging apparatus control apparatus 20 starts the charging apparatus communication control unit 43 (T). The charging apparatus communication control unit 43 then starts the charging apparatus wireless communication unit 21 (B') and the charging apparatus second wireless communication unit 83 (AL). The charging apparatus control apparatus 20 then transmits a communication establishment instruction to the charging apparatus communication control unit 43 (U). The charging apparatus communication control unit 43 issues a power feeding apparatus search instruction to the charging apparatus wireless communication unit 21 (D'). The charging apparatus wireless communication unit 21 having received the power feeding apparatus search instruction outputs a power feeding apparatus search request as a broadcast via the charging apparatus antenna 23 (E). At this time, the power feeding apparatus search request signal includes the MAC address of the charging apparatus wireless communication unit 21. When the power feeding apparatus search request is received by the power feeding apparatus wireless communication unit 12a via the power feeding apparatus antenna 14a of the power feeding apparatus 71a, the power feeding apparatus wireless communication unit 12a transmits a reception notification to the power feeding apparatus communication control unit 33a (F'). The power feeding apparatus communication control unit 33a then starts the power feeding apparatus second wireless communication unit 73a (AM). The respective power feeding apparatuses 71b, 71c also perform the operations (F') and (AM) upon receipt of the power feeding apparatus search request.

Next, the charging apparatus communication control unit 43 transmits a vehicle ID transmission instruction to the charging apparatus second wireless communication unit 83 (H"). The charging apparatus second wireless communication unit 83 outputs the vehicle ID and the vehicle ID is transmitted as a radio wave via the charging apparatus second antenna 84 (AN). Because the power feeding apparatus second antenna 74a is positioned within a range where communication with the charging apparatus second antenna 84 is possible, the power feeding apparatus second wireless communication unit 73a can receive the vehicle ID signal from the charging apparatus second antenna 84 via the power feeding apparatus second antenna 74a (AO). The strength of the radio wave used for wireless communication at this time is such that wireless communication is established only between the charging apparatus second antenna 84 and the power feeding apparatus second antenna 74a. Because the power feeding apparatus second antennas (not shown) of the power feeding apparatus 71b, 71c are sufficiently away from the charging apparatus second antenna (not shown), the power feeding apparatus second wireless communication units (not shown) of the power feeding apparatus 71b, 71c do not receive the vehicle ID. The power feeding apparatus second wireless communication unit 73a notifies the power feeding apparatus communication control unit 33a of the vehicle ID (K"). The power feeding apparatus communication control unit 33a then notifies the power feeding apparatus wireless communication unit 12a of the vehicle ID (L'). The charging apparatus communication control unit 43 then transmits a power feeding apparatus search instruction to the charging apparatus wireless communication unit 21 (M'). The charging apparatus wireless communication unit 21 having received the power feeding apparatus search instruction outputs a power feeding apparatus search request together with the vehicle ID as a broadcast via the charging apparatus antenna 23 (N). The power feeding apparatus wireless communication unit 12a receives the power feeding apparatus search request via the power feeding apparatus antenna 14a of the power feeding apparatus 71a. At this time, the power feeding apparatuses 71b, 71c also receive the power feeding apparatus search request.

The power feeding apparatus wireless communication unit 12a compares the received vehicle ID with the previously notified vehicle ID (O). At this time, the respective power feeding apparatus wireless communication units (not shown) of the power feeding apparatuses 71b, 71c have not been notified of the vehicle ID by second wireless communication, and therefore do not perform the comparison. Subsequent operations are identical to the second embodiment.

By providing the power feeding apparatus second wireless communication unit 73a and the power feeding apparatus second antenna 74a in the power feeding apparatus 71a, providing the charging apparatus second wireless communication unit 83 and the charging apparatus second antenna 84 in the charging apparatus 81, transmitting the vehicle ID between the power feeding apparatus second wireless communication unit 73a and the charging apparatus second wireless communication unit 83, and comparing the transmitted vehicle ID with the vehicle ID transmitted between the power feeding apparatus wireless communication unit 12a and the charging apparatus wireless communication unit 21, the charging station 2a with which the vehicle 3 should establish a wireless communication connection can be specified easily and reliably among a plurality of charging stations 2a, 2b, 2c.

In the fourth embodiment, the power feeding apparatus communication unit 72a and the charging apparatus communication unit 82 are provided, but instead of providing these units, the power feeding apparatus wireless communication unit 12a and the power feeding apparatus second wireless communication unit 73a may be provided independently and the charging apparatus wireless communication unit 21 and the charging apparatus second wireless communication unit 83 may be provided independently , similarly to the first embodiment. Further, in the fourth embodiment, the communication connection request is output by the charging apparatus wireless communication unit 21 of the charging apparatus 81, but similarly to the modified example (see Fig. 7) of the first embodiment, a sequence in which the communication connection request is output from the power feeding apparatus wireless communication unit 12a of the power feeding apparatus 71a may be adopted. Furthermore, similarly to the modified example (see Fig. 12) of the third embodiment, a sequence in which the power feeding apparatuses 71a, 71b, 71c transmit power feeding apparatus search responses including the respective station IDs and MAC addresses thereof to the charging apparatus 81 in response to the power feeding apparatus search request, and the charging apparatus communication control unit 43 of the charging apparatus 81 makes a list of the charging station that responds to the power feeding apparatus search request may be adopted.

Moreover, in the fourth embodiment, although only a single power feeding apparatus second wireless communication unit 73, power feeding apparatus second antenna 74, charging apparatus second wireless communication unit 83, and charging apparatus second antenna 84 are each provided respectively, a plurality of each may be provided in each of equal a numbers. In this case, detection results obtained during the second wireless communication can be handled as valid data when the detection results from all of the plurality of power feeding apparatus second wireless communication units 73 match, and as a result, the reliability of the data read during the second wireless communication can be improved.

### Fifth Embodiment

Next, a configuration of a noncontact charging system according to a fifth embodiment of the present invention will be described.

The noncontact charging system according to the fifth embodiment of the present invention differs from the fourth embodiment in that a loop coil for detecting entrance of the vehicle is provided in the power feeding apparatus and the functions of the power feeding apparatus second antenna are replaced by this loop coil.

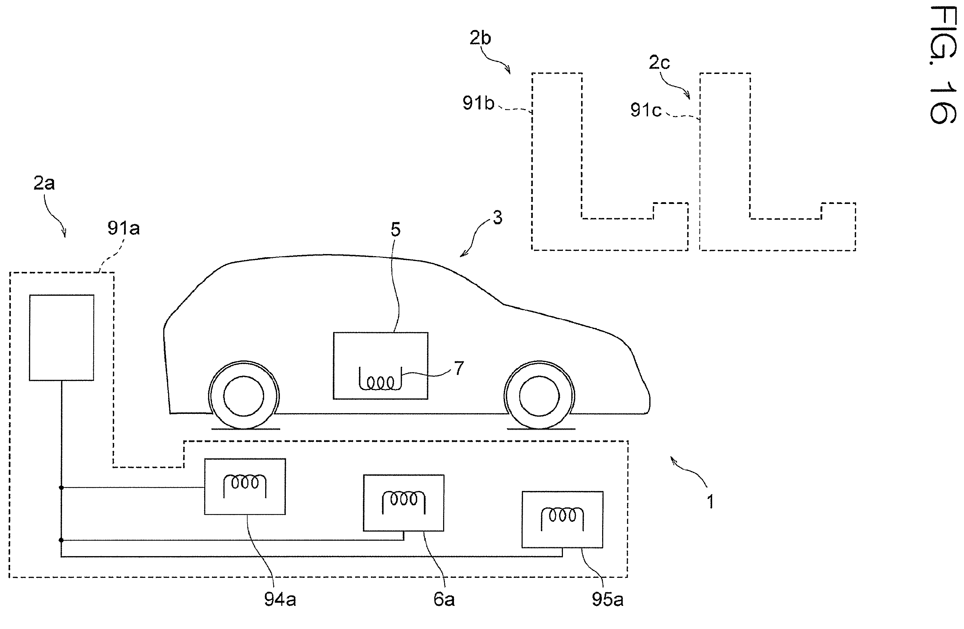

Fig. 16 shows the constitution of the noncontact charging system 1. Entrance detecting loop coils 94a, 95a are provided in a power feeding apparatus 91a of the charging station 2a of the noncontact charging system 1. The entrance detecting loop coils 94a, 95a are provided on the floor surface or the like of the charging station 2a on an entrance path of the vehicle 3 so as to be capable of detecting entrance of the vehicle 3 into the parking space of the charging station 2a. Entrance detecting loop coils (not shown) in the drawing, are also provided in a power feeding apparatus 91b of the charging station 2b and a power feeding apparatus 91c of the charging station 2c.

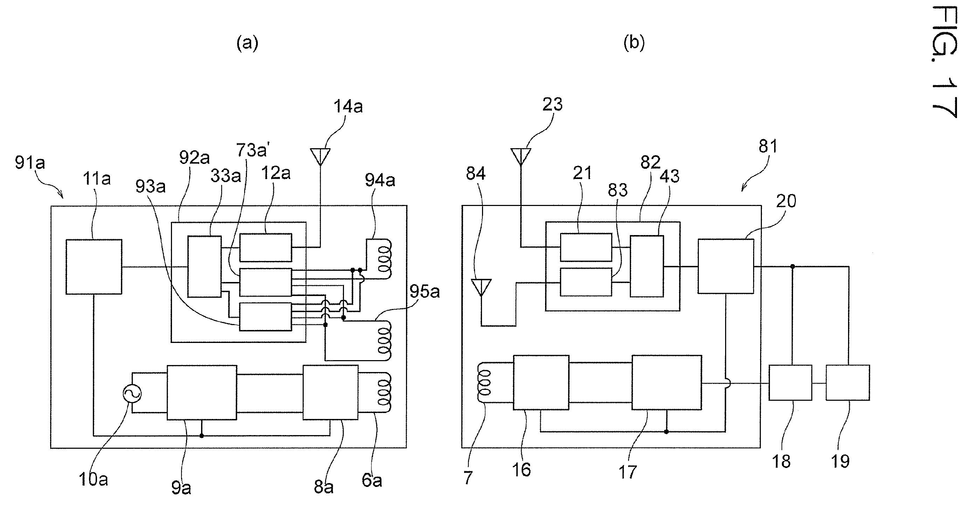

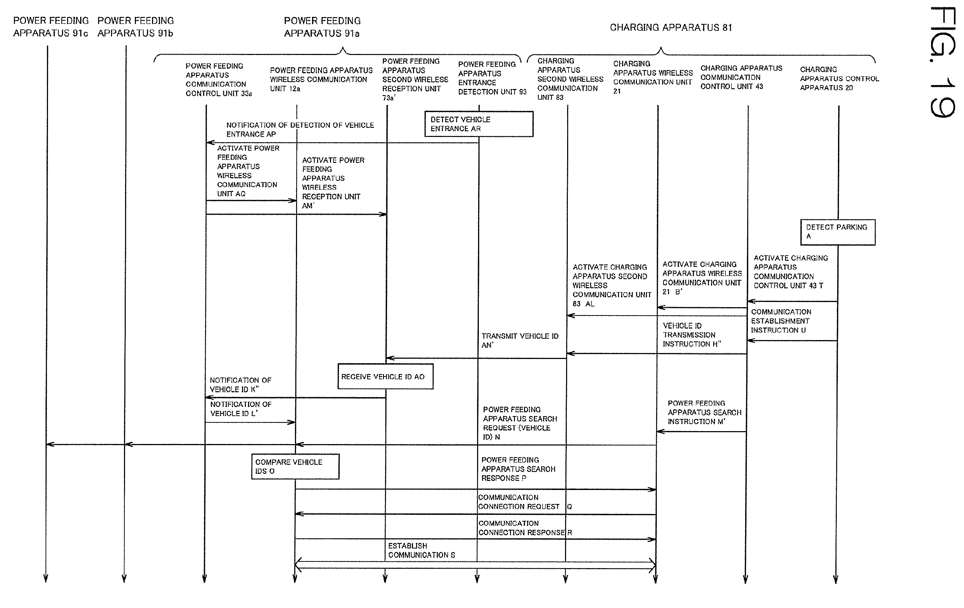

Fig. 17(a) shows a configuration of the power feeding apparatus 91a. The power feeding apparatus communication control unit 33a, a power feeding apparatus wireless reception unit 73a', and an entrance detection unit 93a are provided in the interior of a power feeding apparatus communication unit 92a provided in the power feeding apparatus 91a. The power feeding apparatus wireless reception unit 73a' is electrically connected to the power feeding apparatus communication control unit 33a. The entrance detection unit 93a is electrically connected to the power feeding apparatus communication control unit 33a. The power feeding apparatus wireless reception unit 73a' is electrically connected to the entrance detecting loop coils 94a, 95a. The entrance detection unit 93a is electrically connected to the entrance detecting loop coils 94a, 95a. The other two charging stations 2b, 2c are configured similarly so as to include the power feeding apparatuses 91b, 91c (see Fig. 19), which are configured similarly to the power feeding apparatus 91a. All other configurations are identical to the fourth embodiment.

Fig. 17(b) shows a configuration of the charging apparatus 81. Although the charging apparatus 81 is configured identically to the fourth embodiment, the charging apparatus second antenna 84 is disposed such that when the vehicle 3 is parked in a predetermined location of the charging station 2a, the charging apparatus second antenna 84 is positioned within a limited communication range relative to at least one of the entrance detecting loop coils 94a, 95a, thereby ensuring that no interference with an adjacent vehicle occurs.

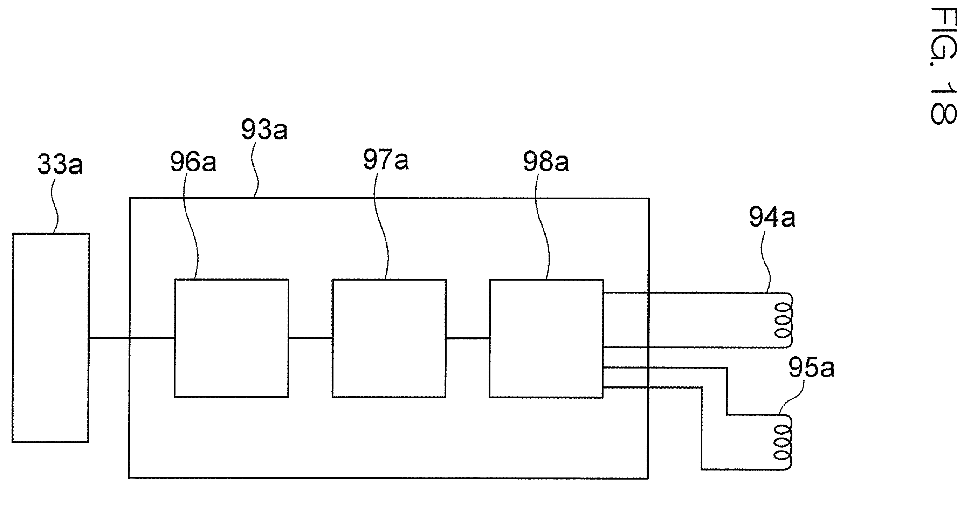

Fig. 18 shows a configuration of the entrance detection unit 93a. The entrance detection unit 93a comprises an entrance detection determination unit 96a that determines whether or not the vehicle has entered, an inductance value variation detection unit 97a that detects variation in an inductance value occurring when the vehicle enters, and a filter 98a. The entrance detection determination unit 96a is electrically connected to the power feeding apparatus communication control unit 33a on the exterior of the entrance detection unit 93a and the inductance value variation detection unit 97a. The filter 98a is electrically connected to the inductance value variation detection unit 97a and the entrance detecting loop coils 94a, 95a on the exterior of the entrance detection unit 93a. Entrance detection units (not shown) of the other two power feeding apparatuses 91b, 91c (see Fig. 19) are configured similarly.

Next, operation of the noncontact charging system according to the fifth embodiment of the present invention will be described.

As shown in Fig. 16, when the vehicle 3 enters the parking space of the charging station 2a, the vehicle 3 which is made of metal passes close to at least one of the entrance detecting loop coils 94a, 95a so that the inductance values of the entrance detecting loop coils 94a, 95a vary. Because an alternating current flows through the entrance detecting loop coils 94a, 95a, the variation in the inductance value leads to variation in terminal voltage and frequency. As shown in Fig. 18, the variation in the terminal voltage or the frequency is input into the filter 98a of the entrance detection unit 93a. The variation in the terminal voltage or the frequency having passed through the filter 98a is then input into the inductance value variation detection unit 97a, and the inductance value variation detection unit 97a detects variation in the inductance value on the basis of the variation in the input value (the terminal voltage or the frequency) and outputs the detected variation as an electric signal to the entrance detection determination unit 96a. The entrance detection determination unit 96a, having received the electric signal, determines that a vehicle has entered. Entrance of the vehicle is thus detected by the entrance detection unit 93a.

Fig. 19 shows an example of the sequence of the fifth embodiment. In Fig. 19, the alphabetic characters identical to those in Figs. 5, 9, and 15 refer to identical operations, the alphabetic characters with an apostrophe or and a double quotation mark refer to the operations which modify operations of the same alphabetic characters in Fig. 5, Fig. 9 and Fig. 15, and the alphabetic characters not shown in Figs. 5, 9, and 15 refer to operations performed only in the fifth embodiment. When the entrance detection unit 93a detects entrance of the vehicle 3 (AR), the entrance detection unit 93a outputs a vehicle entrance detection notification to the power feeding apparatus communication control unit 33a (AP). Because the vehicle 3 does not enter either of the parking spaces of charging stations 2b, 2c, the entrance detection units (not shown) of the power feeding apparatuses 91b, 91c do not detect the vehicle 3 entering the parking spaces so do not output a vehicle entrance detection notification. The power feeding apparatus communication control unit 33a having received the vehicle entrance detection notification, starts the power feeding apparatus wireless communication unit 12a (AQ) and the power feeding apparatus wireless reception unit 73a' (AM'). Subsequent operations from the point at which the charging apparatus control apparatus 20 detects parking of the vehicle 3 (A) to the point at which the charging apparatus communication control unit 43 outputs the vehicle ID transmission instruction to the charging apparatus second wireless communication unit 83 (H") are identical to the fourth embodiment.

The charging apparatus second wireless communication unit 83 transmits the vehicle ID of the vehicle 3 as a radio wave via the charging apparatus second antenna 84 (AN'). Because the charging apparatus second antenna 84 is positioned within a limited range where communication with at least one of the entrance detecting loop coils 94a, 95a is possible, the vehicle ID is received by at least one of the entrance detecting loop coils 94a, 95a. The vehicle ID is then input into the power feeding apparatus wireless reception unit 73a' so as to be received by the power feeding apparatus wireless reception unit 73a' (AO). The strength of the radio wave used for wireless communication at this time is set such that wireless communication is established only between the charging apparatus second antenna 84 and at least one of the entrance detecting loop coils 94a, 95a. Further, because the power feeding apparatus wireless reception units (not shown) of the power feeding apparatuses 91b, 91c do not start in this time, they do not receive the vehicle ID. The power feeding apparatus wireless reception unit 73a' notifies the power feeding apparatus communication control unit 33a of the vehicle ID (K"). Subsequent operations are identical to the fourth embodiment.

By providing the vehicle entrance detecting loop coils 94a, 95a in the power feeding apparatus 91a and transmitting the vehicle ID wirelessly between the charging apparatus second antenna 84 and the entrance detecting loop coils 94a, 95a, entrance of the vehicle 3 can be detected and effects similar to the fourth embodiment can be obtained.

In the fifth embodiment, two entrance detecting loop coils are provided for each charging station, but a single entrance detecting loop coil may be provided instead. When two entrance detecting loop coils are provided for each charging station, an advantage is obtained in that the direction in which the vehicle enters the parking space of the charging station does not have to be limited. Three or more entrance detecting loop coils may be also provided for each charging station. Further, although in the fifth embodiment, the power feeding apparatus communication unit 92a and the charging apparatus communication unit 82 are provided, instead of providing these units, the power feeding apparatus wireless communication unit 12a, the power feeding apparatus wireless reception unit 73a' and the entrance detection unit 93 may be provided independently, and the charging apparatus wireless communication unit 21 and the charging apparatus second wireless communication unit 83 may be provided independently, similar to the first embodiment. Moreover, although in the fifth embodiment, the communication connection request is output by the charging apparatus wireless communication unit 21 of the charging apparatus 81, similar to the modified example (see Fig. 7) of the first embodiment, a sequence in which the communication connection request is output from the power feeding apparatus wireless communication unit 12a of the power feeding apparatus 91a may be adopted.

In the first to fifth embodiments, power transmission between the power feeding coil 6 and the power reception coil 7 is performed using an electromagnetic induction method, but another noncontact charging method, such as a magnetic resonance method, may be used.

In the first, second, and fourth embodiments, the MAC address of the charging apparatus wireless communication unit 21 and the vehicle ID may be included in the signal of the power feeding apparatus search request (E). As a result, the power feeding apparatus wireless communication unit 12a can compare the vehicle IDs even without receiving the power feeding apparatus search request (N).

In the first and second embodiments, the sensor detection unit 13a may be started from the beginning. In so doing, the need for the sequence for starting the sensor detection unit 13a can be eliminated. Similarly, the excitation control unit 22a in the third embodiment, the power feeding apparatus second wireless communication unit 73a in the fourth embodiment, and the power feeding apparatus wireless reception unit 73a' in the fifth embodiment may be started from the beginning, respectively.

In the first to fifth embodiments, a noncontact charging system having a plurality of charging stations was described, but the present invention may be also applied to a case in which only one charging station exists. The charging station with which the vehicle should establish a wireless communication connection can be also specified even in a case where only one charging station exists.

## Claims

1. A noncontact charging system comprising a charging apparatus installed in a vehicle and one or more charging stations, each of the charging stations comprising:
a power feeding apparatus that supplies power to the charging apparatus;
a power feeding apparatus wireless communication unit provided in the power feeding apparatus in order to perform wireless communication; and
a power feeding apparatus noncontact communication unit provided in the power feeding apparatus in order to perform noncontact communication,
the charging apparatus comprising:
a charging apparatus wireless communication unit in order to perform the wireless communication; and
a charging apparatus noncontact communication unit in order to perform the noncontact communication,
wherein the wireless communication can be performed between the charging apparatus and the one or more power feeding apparatuses, and the noncontact communication can be performed between the charging apparatus and only one of the one or more power feeding apparatuses, and wherein an ID determined individually for each vehicle or each charging station is transmitted and received by the wireless communication, the ID is transmitted and received by the noncontact communication, and the noncontact charging system compares the ID which is transmitted and received by the wireless communication with the ID which is transmitted and received by the noncontact communication, whereby, the noncontact charging system specifies a power feeding apparatus which should perform the wireless communication to the charging apparatus, from the one or more power feeding apparatuses and establishes a wireless communication between the power feeding apparatus and the charging apparatus.

2. The noncontact charging system according to claim 1, wherein the charging apparatus noncontact communication unit comprises an excitation coil that varies a magnetic field in response to an electrical input, and an excitation control unit for performing excitation control on the excitation coil,
wherein the power feeding apparatus noncontact communication unit comprises a magnetic sensor that outputs the variation in the magnetic field by the excitation coil as a signal, and a sensor detection unit that detects the signal from the magnetic sensor, and
wherein the signal is detected by the sensor detection unit, whereby the ID is transmitted and received between the excitation control unit and the sensor detection unit.

3. The noncontact charging system according to claim 1, wherein the power feeding apparatus noncontact communication unit comprises an excitation coil that varies a magnetic field in response to an electrical input, and an excitation control unit for performing excitation control on the excitation coil,
wherein the charging apparatus noncontact communication unit comprises a magnetic sensor that outputs the variation generated in the magnetic field by the excitation coil as a signal, and a sensor detection unit that detects the signal from the magnetic sensor, and
wherein the signal is detected by the sensor detection unit, whereby the ID is transmitted and received between the excitation control unit and the sensor detection unit.

4. The noncontact charging system according to claim 1, wherein the charging apparatus noncontact communication unit comprises a charging apparatus second wireless communication unit,
wherein the power feeding apparatus noncontact communication unit comprises a power feeding apparatus second wireless communication unit, and
wherein the ID is transmitted and received by second wireless communication performed between the charging apparatus second wireless communication unit and the power feeding apparatus second wireless communication unit.

5. The noncontact charging system according to claim 4, wherein the power feeding apparatus noncontact communication unit comprises at least one entrance detecting loop coil for detecting entrance of a vehicle, and the second wireless communication is performed via the entrance detecting loop coil.

6. The noncontact charging system according to any one of claims 1 to 5, wherein the charging apparatus comprises two or more of the charging apparatus noncontact communication units, and the power feeding apparatus comprises two or more of the power feeding apparatus noncontact communication units.

7. The noncontact charging system according to any one of claims 1 to 6, wherein the ID is an ID determined individually for each charging station,
wherein the charging apparatus makes a responsive charging station list of the power feeding apparatuses that have transmitted and received the ID by the wireless communication, and
wherein the ID and a MAC address are stored in the responsive charging station list such that they correspond to each other.

8. The noncontact charging system according to any one of claims 1 to 7, wherein the power feeding apparatus comprises a power feeding apparatus communication unit including the power feeding apparatus wireless communication unit, the power feeding apparatus noncontact communication unit, and a power feeding apparatus communication control unit that controls the power feeding apparatus wireless communication unit and the power feeding apparatus noncontact communication unit, and
wherein the charging apparatus comprises a charging apparatus communication unit including the charging apparatus wireless communication unit, the charging apparatus noncontact communication unit, and a charging apparatus communication control unit that controls the charging apparatus wireless communication unit and the charging apparatus noncontact communication unit.
